# EUROPÄISCHE PATENTSCHRIFT

(11) **EP 2 613 969 B1**
(45) Veröffentlichungstag und Bekanntmachung des Hinweises auf die Patenterteilung: **14.10.2015**
(21) Anmeldenummer: 11755001.2
(22) Anmeldetag: 29.08.2011
(51) Int. Cl.: A47C 7/38, F16H 19/02, B60N 2/48

(54) **IN X-RICHTUNG VERSTELLBARE KOPFSTÜTZE**
HEAD SUPPORT THAT CAN BE MOVED IN THE X DIRECTION
APPUIE-TÊTE MOBILE DANS LA DIRECTION X

(30) Priorität: 06.09.2010 DE 102010044448
(43) Veröffentlichungstag der Anmeldung: 17.07.2013
(73) Patentinhaber: Johnson Controls GmbH, 51399 Burscheid (DE)
(72) Erfinder: RADHAKRISHNAN, Prashanth (PVR), 51379 Leverkusen (DE)
(74) Vertreter: Wolff, Felix
(86) Internationale Anmeldenummer: PCT/EP2011/004317
(87) Internationale Veröffentlichungsnummer: WO 2012/031701

(56) Entgegenhaltungen:
- DE-A1-102009 038 631

## Beschreibung

Die vorliegende Erfindung betrifft eine Kopfstütze mit einem Kopfstützkasten, der relativ zu zumindest einer Haltestange in X-Richtung verschiebbar vorgesehen ist.

Die gattungsgemäße Kopfstütze ist aus dem Stand der Technik hinlänglich bekannt (siehe, z.B. DE-A-102009038631). Eine derartige Kopfstütze ist in X-Richtung, d. h. mit der Kopfanlagefläche zu dem Kopf des Sitzinsassen hin und davon weg zu Komfortzwecken oder aus Sicherheitsgründen verstellbar. Derartige Kopfstützen müssen zum einen einfach zu fertigen und zu bedienen sein. Insbesondere muss sichergestellt werden, dass der Kopfstützkasten bei seiner Bewegung nicht verkantet.

Es war deshalb die Aufgabe der vorliegenden Erfindung eine Kopfstütze zur Verfügung zu stellen, die sicher herzustellen und zu handhaben ist.

Gelöst wird die Aufgabe mit einer Kopfstütze mit einem Kopfstützkasten, der relativ zu mindestens einer Haltestange in X-Richtung verschiebbar ist, wobei der Kopfstützkasten ein Form- und/oder Kraftschlussmittel an gegenüberliegenden Außenwänden und jeweils zwei Form- und/oder Kraftschlussmittel an mindestens einer Innenwand aufweist und dass zwischen jeweils zwei Form- und/oder Kraftschlussmitteln ein erstes und ein zweites Ritzel angeordnet ist, die jeweils mit einem Form- und/oder Kraftschlussmittel in Eingriff stehen und miteinander kämmen.

Die vorliegende Erfindung betrifft eine Kopfstütze, die mit einer, vorzugsweise zwei Haltestangen beispielsweise an der Rückenlehne eines Fahrzeugsitzes oder an der Karosserie eines Fahrzeuges vorgesehen ist. Derartige Kopfstützen sind vorzugsweise höhenverstellbar und/oder neigungsverstellbar vorgesehen, um an die Größe des Sitzinsassen anpassbar zu sein.

Die erfindungsgemäße Kopfstütze weist einen Kopfstützkasten auf, der relativ zu der oder den Haltestangen in X-Richtung d. h. zum Kopf des Insassen hin oder davon weg verstellbar ist. Vorzugsweise ist der Kopfstützkasten in der jeweils gewünschten Stellung zumindest in eine Richtung arretiert.

Erfindungsgemäß weist der Kopfstützkasten Außenwände, beispielsweise sechs Außenwände auf. An zwei dieser Außenwände, vorzugsweise an zwei Außenwänden, die parallel zu der X-Richtung vorgesehen sind und die besonders bevorzugt im Wesentlichen vertikal ausgerichtet sind, sind innenliegend jeweils Form- und/oder Kraftschlussmittel beispielsweise in Form von Zahnstangen vorgesehen.

Weiterhin erfindungsgemäß weist der Kopfstützkasten innenliegend zwei zusätzliche Form- und/oder Kraftschlussmittel auf, die an mindestens einer vorzugsweise zwei Innenwänden angeordnet ist. Diese Form- und/oder Kraftschlussmittel sind vorzugsweise parallel zu den Form- und/oder Kraftschlussmitteln an der Außenwand angeordnet.

Zwischen jeweils einem an der Außenwand und einem an der Innenwand angeordneten Form- und/oder Kraftschlussmitteln sind jeweils zwei Ritzel angeordnet, die jeweils mit einem Form- und/oder Kraftschlussmittel an der Außen - bzw. Innenwand in Eingriff stehen und die miteinander kämmen. Die erfindungsgemäße Kopfstütze weist folglich vorzugsweise mindestens vier Ritzel auf. Vorzugsweise haben die Ritzel denselben Durchmesser und dieselbe Anzahl an Zähnen.

Dadurch ist sichergestellt, dass der Kopfstützkasten eine absolut parallele Bewegung zu den Kopfstützstangen durchführt und nicht verkanten kann.

Gemäß einem weiteren erfindungsgemäßen oder bevorzugten Gegenstand der vorliegenden Erfindung ist in dem Kopfstützkasten mindestens ein Stabilisierungsmittel vorgesehen, das an einer Haltestange drehgelagert ist und das eine schlitzförmige Ausnehmung aufweist, die die andere Haltestange aufnimmt. Durch dieses Stabilisierungsmittel ist es möglich, den Kopfstützkasten insbesondere in seinen Extrempositionen zu stützen.

Vorzugsweise weist die Kopfstütze zwei Stabilisierungselemente auf, die vertikal voneinander beabstandet vorgesehen sind. Vorzugsweise ist ein Stabilisierungselement am oberen und eins am unteren Ende des Kopfstützkastens vorgesehen. Vorzugsweise sind die Stabilisierungselemente so vorgesehen, dass sie sich gegenläufig drehen.

Vorzugsweise weist die Kopfstütze ein Arretierungsmittel auf, das sie in der jeweiligen Lage zumindest in einer Bewegungsrichtung arretiert.

Im Folgenden wird die Erfindung anhand der Figuren 1 - 11 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt eine Ausführungsform der erfindungsgemäßen Kopfstütze.
**Figuren 2 bis 6** zeigen eine erste Ausführungsform eines Arretierungsmittels.
**Figuren 7 bis 9** zeigen eine zweite Ausführungsform eines Arretierungsmittels.
**Figur 10** zeigt die Kopfstütze gemäße Figur 1 mit einem Federmittel.
**Figur 11** zeigt eine Kopfstütze mit einem motorischen Antrieb.

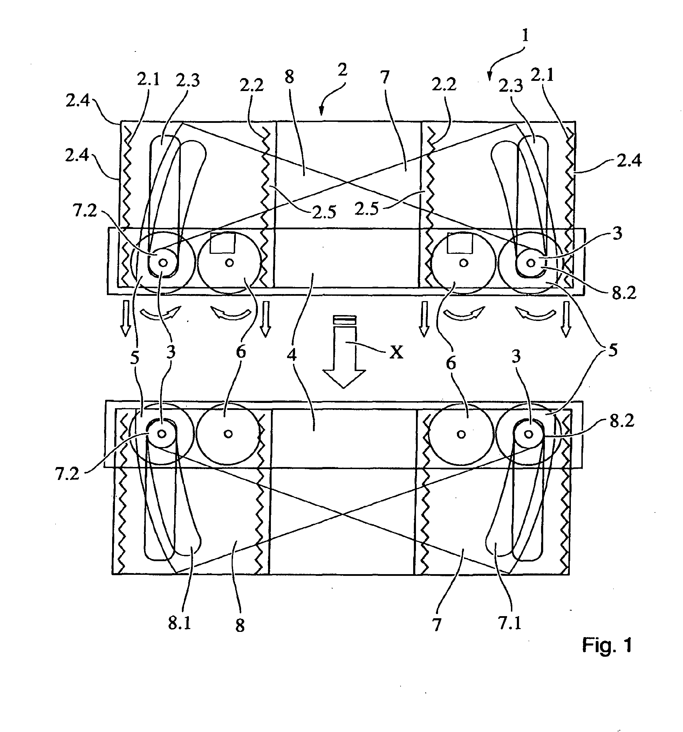

**Figur 1** zeigt eine erste Ausführungsform der erfindungsgemäßen Kopfstütze 1. Diese weist einen Kopfstützkasten 2 auf, der relativ zu zwei Haltestangen 3 in X-Richtung zu Komfort- oder Sicherheitszwecken verschiebbar ist. Dafür ist in dem Kopfstützkasten pro Haltestange jeweils ein Schlitz 2.3 vorgesehen. Der Kopfstützkasten weist sechs Außenwände 2.4 auf, wobei die beiden Außenwände 2.4, die parallel zu der X-Richtung und hier vertikal vorgesehen sind, innenliegend jeweils Form- und/oder Kraftschlussmittel 2.1 beispielsweise in Form von Zähnen aufweisen. Weiterhin weist der Kopfstützkasten innenliegend zwei Innenwände 2.5 auf, die parallel zu den mit den Mitteln 2.1 versehenen Außenflächen 2.4 angeordnet sind und die jeweils auf ihrer dem Mittel 2.1 gegenüberliegenden Oberfläche Form- und/oder Kraftschlussmittel 2.2 aufweisen. Der Fachmann erkennt, dass ggf. auch eine Innenwand ausreichen ist, die dann an zwei Seiten ihrer Oberfläche Form- und/oder Kraftschlussmittel 2.2 aufweist. Zwischen jeweils zwei Mitteln 2.1, 2.2 sind jeweils zwei Ritzel vorgesehen, die jeweils mit einem Mittel 2.1, 2.2 form- und/oder kraftschlüssig in Eingriff stehen und die miteinander kämmen. Die Ritzel 5, 6 sind drehbar jedoch ortsfest hier an einer Platte 4, die vorzugsweise an den Haltestangen 3 gelagert ist, vorgesehen. Wird nun der Kopfstützkasten 2 relativ zu den Haltestangen 3 bzw. zu der Platte 4 bewegt, drehen sich die Ritzel gegenläufig, wie durch die Pfeile dargestellt und kämmen mit den Mitteln 2.1, 2.2. Dadurch ist eine absolut parallele Bewegung des Kopfstützkastens relativ zu den Haltestangen sichergestellt.

Weiterhin ist zu erkennen, dass die erfindungsgemäße Kopfstütze ein erstes und ein zweites Stabilisierungselement 7, 8 aufweist, die hier tortenstückförmig gestaltet sind. Jeweils ein Ende 7.2, 8.2 der Stabilisierungselemente ist drehbar an jeweils einer Haltestange 3 angeordnet. Desweiteren weist jedes Stabilisierungselement einen kreisbogenförmig vorgesehenen Schlitz 7.1, 8.1 auf, der jeweils eine Haltestange 3 aufnimmt. In den beiden Darstellungen gemäß Figur 1 ist jeweils die Kopfstütze in ihren Extremstellungen dargestellt. Durch die Verschiebung der Stabilisierungselemente 7, 8 während der Bewegung in X-Richtung, wird die Kopfstütze in ihren beiden Extremstellungen jeweils optimal gestützt. Vorzugsweise ist ein Stabilisierungselement innerhalb des Kopfstützkastens im oberen Bereich und ein Stabilisierungselement innerhalb des Kopfstützkastens im unteren Bereich vorgesehen. Der Kopfstützkasten ist außen üblicherweise gepolstert und mit einem Bezug überzogen.

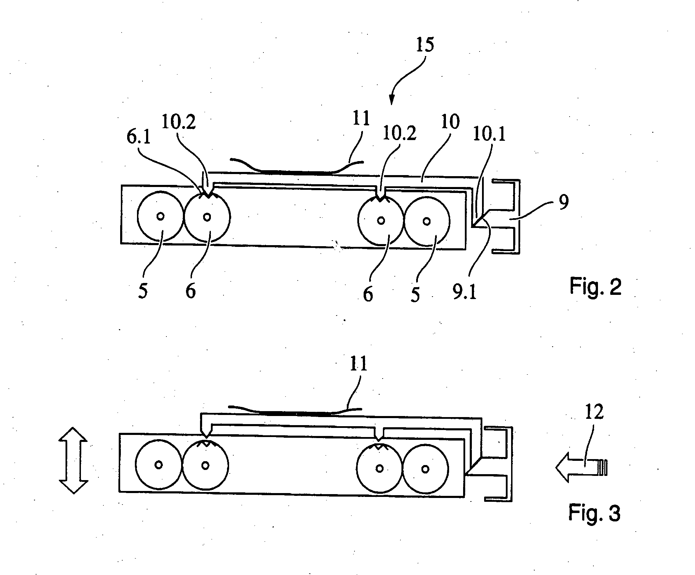

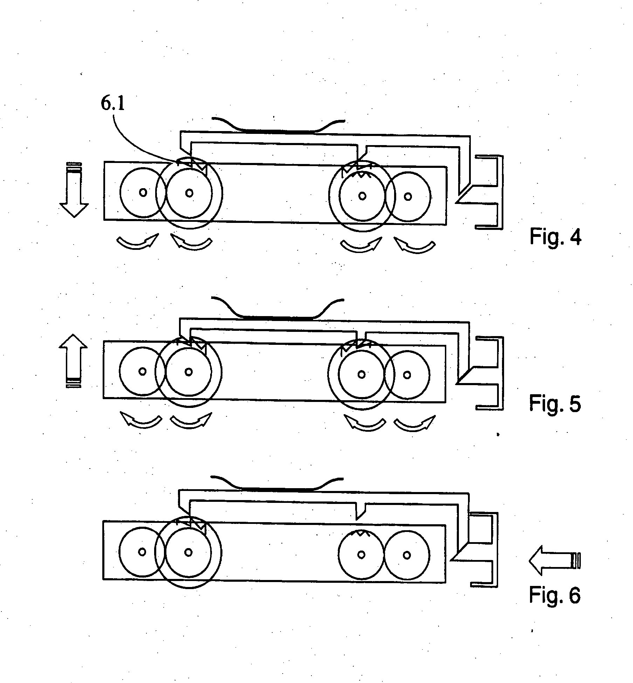

**Figuren 2 bis 6** zeigen eine erste Ausführungsform eines Arretierungselementes 15, das den Kopfstützkasten 2, gemäß Figur 1, in seiner jeweiligen Stellung arretiert. Dafür weist ein Arretierungsmittel 15 ein Gestänge 10 auf, an dem Formschlussmittel 10.2 angeordnet sind, die in die Zähne 6.1 des Ritzels 6 eingreifen und dieses an einer Drehung hindern. Mittels eines Federmittels 11 wird sichergestellt, dass die Formschlussmittel 10.2 im Eingriff mit dem Ritzel 6 stehen. Um die Arretierung zu lösen wird wie in Figur 3 dargestellt eine Druckkraft 12 auf eine Betätigung 9 ausgeübt, die dadurch nach links verschoben wird. Die Betätigung 9 weist eine Schräge 9.1 auf, die mit einer Schräge 10.1, die an dem Gestänge 10 angeordnet ist, zusammenwirkt. Durch die Bewegung der Betätigung 9 nach links wird das Gestänge 10 gegen die Kraft des Federmittels 11 außer Eingriff mit den Ritzeln 6 gebracht und der Kopfstützkasten kann sich frei bewegen. In den Figuren 4 - 6 ist im Wesentlichen die Ausführungsform gemäß den Figuren 2 und 3 dargestellt, nur dass in dem vorliegenden Fall die Formschlussmittel 6.1 der Ritzel 6 so gestaltet sind, dass sich die Ritzel im Uhrzeigersinn frei drehen können, ohne dass die Betätigung 9 gedrückt wird. Dadurch ist sichergestellt, dass der Kopfstützkasten beispielsweise in Richtung des Kopfes des Sitzinsassen gezogen werden kann, ohne dass die Betätigung 9 gedrückt wird. Eine Verschiebung des Kopfstützkastens vom Kopf des Insassen weg, wie sie in Figur 5 dargestellt ist, ist normalerweise blockiert, so dass der Kopfstützkasten" beispielsweise bei einem Heckaufprall, sich nicht aus der gewünschten Stellung selbsttätig wegbewegt. Eine Bewegung des Kopfstützkastens vom Kopf des Insassen weg ist erst möglich, wenn eine Druckkraft auf die Betätigung 9 ausgeübt wird, was in Figur 6 dargestellt ist.

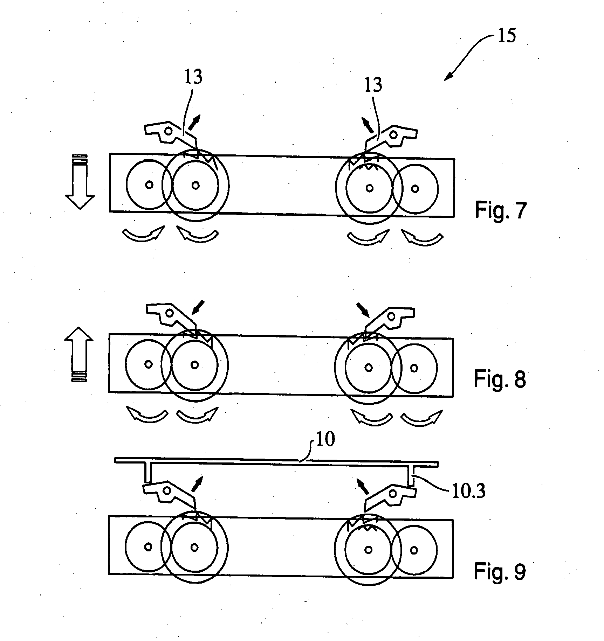

Bei dem Arretierungsmittel 15 gemäß den **Figuren 7 bis 9** wird die Bewegung des Ritzels 6 jeweils durch eine Klinke 13 arretiert, die um einen Drehpunkt drehbar vorgesehen ist. Diese Klinke und die Gestaltung der Formschlussmittel 6.1 erlaubt eine Bewegung zum Kopf des Insassen hin ohne dass das Arretierungsmittel gelöst werden muss, was in Figur 7 dargestellt ist. Eine Bewegung vom Kopf des Sitzinsassen weg wird hingegen blockiert, wie Figur 8 entnommen werden kann. Mittels eines Gestänges 10 kann wie in Figur 9 dargestellt die jeweilige Klinke 13 von den Formschlussmitteln 6.1 entfernt werden, so dass diese sich frei drehen können und der Kopfstützkasten sich frei in X-Richtung bewegen kann.

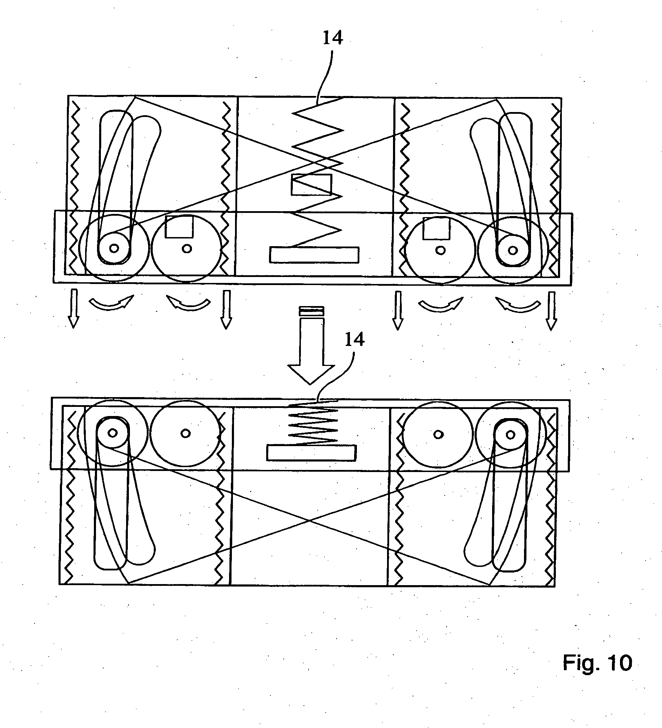

**Figur 10** zeigt eine weitere Ausführungsform der erfindungsgemäßen Kopfstütze, die im Wesentlichen der Ausführungsform gemäß Figur 1 entspricht, wobei in dem vorliegenden Fall ein Federmittel 14 vorgesehen ist, das bei der Bewegung des Kopfstützkastens zum Sitzinsassen hin gespannt wird und dadurch die Bewegung der Kopfstütze vom Sitzinsassen weg unterstützt.

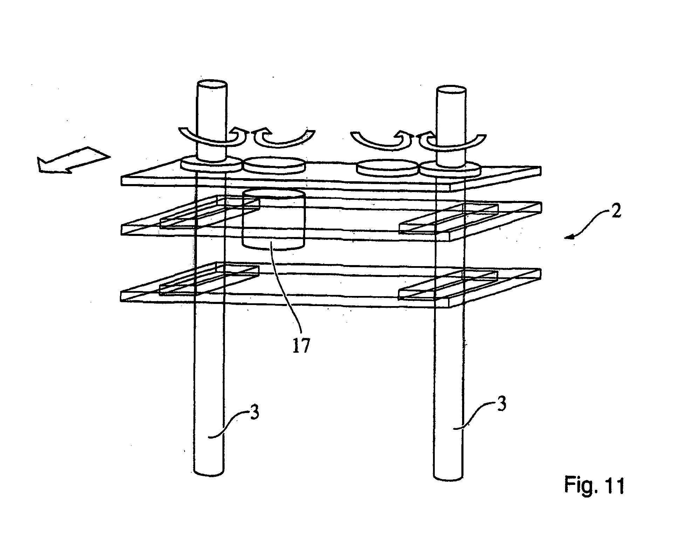

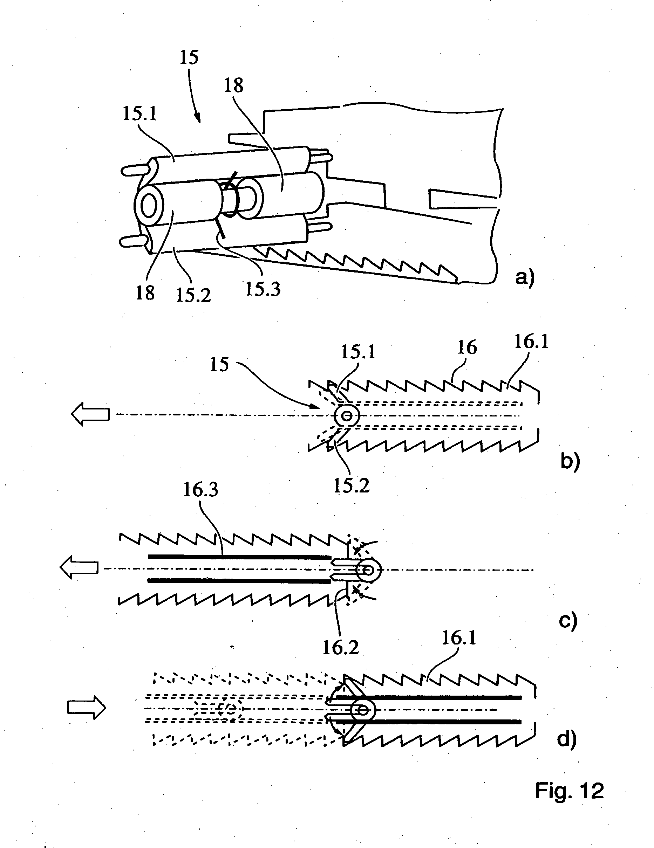

**Figur 11** zeigt schematisch eine weitere Ausführungsform der erfindungsgemäßen Kopfstütze. In dem vorliegenden Fall wird eines der Ritzel 5, 6 vorzugsweise das Ritzel 6, von einem Motor 17 angetrieben, der vorzugsweise in dem Kopfstützkasten 2 vorgesehen ist und dadurch der Kopfstützkasten 2 verstellt. Es ist ausreichend lediglich eines der beiden Ritzel 6 anzutreiben.

### Bezugszeichenliste:

- 1: Kopfstütze
- 2: Kopfstützkasten
- 2.1: Form- und Kraftschlussmittel an einer Außenwand des Kopfstützkastens
- 2.2: Form- und Kraftschlussmittel an einer Innenwand des Kopfstützkastens
- 2.3: schlitzförmige Ausnehmung
- 2.4: Außenwand
- 2.5: Innenwand
- 3: Haltestange
- 4: Platte
- 5: erstes Ritzel
- 6: zweites Ritzel
- 6.1: Formschlussmittel, Zähne des Ritzels
- 7: erstes Stabilisierungselement
- 7.1: schlitzförmige Ausnehmung
- 7.2: Lagerung, Drehlagerung
- 8: zweites Stabilisierungselement
- 8.1: schlitzförmige Ausnehmung
- 8.2: Lagerung, Drehlagerung
- 9: Betätigung
- 9.1: Schräge
- 10: Gestänge
- 10.1: Schräg
- 10.2: Formschlussmittel
- 10.3: Pin
- 11: Federmittel
- 12: Druckkraft
- 13: Rastklinke
- 14: Federmittel
- 15: Arretierungsmittel
- 17: Motor
- X: X-Richtung

## Patentansprüche

1. Kopfstütze (1) mit einem Kopfstützkasten (2), der relativ zu mindestens einer Haltestange (3) in X-Richtung verschiebbar ist, **dadurch gekennzeichnet, dass** der Kopfstützkasten (2) jeweils ein Form- und/oder Kraftschlussmittel (2.1) an gegenüberliegenden Außenwänden (2.4) und jeweils zwei Form- und/oder Kraftschlussmittel (2.2) an mindestens einer Innenwand (2.5) aufweist. und dass zwischen jeweils zwei Form- und/oder Kraftschlussmitteln (2.1, 2.2) ein erstes und ein zweites Ritzel (5, 6) angeordnet ist, die jeweils mit einem Form- und/oder Kraftschlussmittel (2.1, 2.2) in Eingriff stehen und miteinander kämmen.

2. Kopfstütze (1) nach Anspruch 1, **dadurch gekennzeichnet, dass** in dem Kopfstützkasten mindestens ein Stabilisierungselement (7, 8) vorgesehen ist, das an einer Haltestange (3) drehgelagert ist und das eine schlitzförmige Ausnehmung (7.1, 8.1) aufweist, die die andere Haltestange (3) aufnimmt. 3

3. Kopfstütze (1) nach Anspruch 2, **dadurch gekennzeichnet, dass** es zwei Stabilisierungselemente (7, 8) aufweist, die vertikal voneinander beabstandet vorgesehen sind.

4. Kopfstütze (1) nach Anspruch 3, **dadurch gekennzeichnet, dass** die Stabilisierungselemente (7, 8) gegenläufig angeordnet sind.

5. Kopfstütze (1) nach einem der voranstehenden Ansprüche, **dadurch gekennzeichnet, dass** sie ein Arretierungsmittel (15) aufweist.

## Claims

1. Head support (1) with a head support box (2) that is displaceable in the X direction relative to at least one holding bar (3), **characterized in that** the head support box (2) has one interlocking and/or frictional means (2.1) on both opposite outer walls (2.4) and has in each case two interlocking and/or frictional means (2.2) on at least one inner wall (2.5), and **in that** a first and a second pinion (5, 6) is arranged between in each case two interlocking and/or frictional means (2.1, 2.2), said pinions respectively engaging with an interlocking and/or frictional means (2.1, 2.2) and meshing with each other.

2. Head support (1) according to Claim 1, **characterized in that** at least one stabilizing element (7, 8) is provided in the head support box, said stabilizing element being rotationally mounted on a holding bar (3) and having a slot-shaped recess (7.1, 8.1) which receives the other holding bar (3).

3. Head support (1) according to Claim 2, **characterized in that** it has two stabilizing elements (7, 8) which are provided vertically spaced apart from each other.

4. Head support (1) according to Claim 3, **characterized in that** the stabilizing elements (7, 8) are arranged in an opposed manner.

5. Head support (1) according to one of the preceding claims, **characterized in that** it has a locking means (15) .

## Revendications

1. Appui-tête (1) comprenant une coque d'appui-tête (2) qui peut être déplacée dans la direction X par rapport à au moins une barre de fixation (3), **caractérisé en ce que** la coque d'appui-tête (2) présente à chaque fois un moyen d'engagement par correspondance de forme et/ou par force (2.1) au niveau de parois extérieures opposées (2.4) et à chaque fois deux moyens d'engagement par correspondance de forme et/ou par force (2.2) au niveau d'au moins une paroi intérieure (2.5), et **en ce qu'**entre deux moyens d'engagement par correspondance de forme et/ou par force respectifs (2.1, 2.2) sont disposés un premier et un deuxième pignon (5, 6), lesquels pignons sont en prise à chaque fois avec un moyen d'engagement par correspondance de forme et/ou par force (2.1, 2.2) et s'engrènent l'un avec l'autre.

2. Appui-tête (1) selon la revendication 1, **caractérisé en ce que** dans la coque d'appui-tête est prévu au moins un élément de stabilisation (7, 8) qui est supporté de manière rotative sur une barre de fixation (3) et qui présente un évidement en forme de fente (7.1, 8.1) qui reçoit l'autre barre de fixation (3).

3. Appui-tête (1) selon la revendication 2, **caractérisé en ce qu'**il présente deux éléments de stabilisation (7, 8) qui sont prévus de manière espacée verticalement l'un de l'autre.

4. Appui-tête (1) selon la revendication 3, **caractérisé en ce que** les éléments de stabilisation (7, 8) sont disposés dans des sens opposés.

5. Appui-tête (1) selon l'une quelconque des revendications précédentes, **caractérisé en ce qu'**il présente un moyen de blocage (15).
